# EUROPÄISCHE PATENTSCHRIFT

(11) **EP 0 282 804 B1**
(45) Veröffentlichungstag und Bekanntmachung des Hinweises auf die Patenterteilung: **10.02.1993**
(21) Anmeldenummer: 88103026.6
(22) Anmeldetag: 01.03.1988
(51) Int. Cl.: G06K 1/12, G06K 7/00

(54) **Verfahren zum Erfassen von auf Vorlagen aufgebrachten Codes in einer Mikrofilmkamera und entsprechende Mikrofilmkamera**
Registering process of codes placed on documents with the help of a micro film camera and corresponding micro film camera
Procédé de recensement des codes placés sur des documents à l'aide d'une caméra à micro-films et caméra à micro-films correspondante

(30) Priorität: 05.03.1987 DE 3706992
(43) Veröffentlichungstag der Anmeldung: 21.09.1988
(73) Patentinhaber: Agfa-Gevaert AG, 51373 Leverkusen (DE)
(72) Erfinder: Weinzierl, Manfred, D-8068 Pfaffenhofen (DE); Zieran, Eberhard, Ing. grad., D-8022 Gruenwald (DE)

(56) Entgegenhaltungen:
- DE-A- 3 112 494
- DE-A- 3 220 977
- US-A- 4 116 560
- US-A- 4 283 621

## Beschreibung

Die Erfindung betrifft ein Verfahren zum Erfassen von auf zu verfilmenden Vorlagen aufgebrachten Codes in einer Mikrofilmkamera mit einem Codeleser, in der auf den Film in einer Belichtungsstation den einzelnen Bildern der Vorlagen zugeordnete, ggf. unterschiedliche Blips aufgebracht werden, und eine Mikrofilmkamera zur Durchführung des Verfahrens.

Ein Verfahren und eine Mikrofilmkamera der eingangs genannten Art sind bekannt durch die DE-PS 33 03 647. Hierbei werden die auf den Mikrofilm aufgebrachten Blips fortlaufend gezählt und die so erhaltenen Bildnummern direkt dem auf der Vorlage zum entsprechenden Bild gelesenen Code zugeordnet, wobei vorher der Code überprüft wird und die Bildaufnahme bzw. die weiteren Vorgänge nur durchgeführt werden, wenn das Überprüfen des Codes dessen Richtigkeit ergeben hat. Beim Eingeben einer Vorlage ohne Code oder mit unbekanntem oder fehlerhaftem Code wird somit der Verfilmungsvorgang unterbrochen. Es ist daher nicht möglich, wahlweise beliebig codierte und uncodierte Vorlagen zu verfilmen und je nach Wunsch Blips verschiedener Arten oder auch keinerlei Blips auf den Film aufzubringen. Außerdem ist die Geschwindigkeit des Verfilmens auch durch das fortlaufende Zählen der Blips und die unmittelbare Zuordnung des Zählergebnisses zu den einzelnen Vorlagen bzw. deren Codes und Adressen beschränkt und nicht nur durch die Stillsetzung der Kamera bei Durchlauf von uncodierten oder falsch codierten Vorlagen.

Demgegenüber liegt der Erfindung die Aufgabe zugrunde, ein Verfahren und eine nach diesem Verfahren arbeitende Mikrofilmkamera der eingans genannten Art zu entwickeln, bei denen wahlweise und durcheinander codierte und uncodierte oder auch falsch codierte Vorlagen mit großer Geschwindigkeit ohne spürbare Unterbrechung verarbeitet werden können und die einzelnen Mikrofilmbilder mit und ohne Blips unterschiedlicher Arten aufgenommen werden können.

Diese Aufgabe wird nach der Erfindung gelöst durch die Merkmale des Hauptanspruchs. Weitere vorteilhafte Merkmale der Erfindung sind den Unteransprüchen entnehmbar.

Durch die Abspeicherung der Ergebnisse des Codelesers in einem Zwischenspeicher, wobei auch nicht vorhandene oder falsche Codes als solche gespeichert und gezählt werden, und der ASCII-Zeichen für Bliparten (also auch für nicht aufgebrachte Blips) in einem anderen Zwischenspeicher und einen Vergleich von deren Zahlen mit einer vorgegebenen (großen) Zahl von durch die Kamera gelaufenen Vorlagen entsteht keine Unterbrechung beim Durchlauf von fehlerhaften oder uncodierten Vorlagen und keine Verzögerung etwa durch eine vorlagen- und bildweise Zuordnung von Codes und fortlaufenden Blipzahlen. Solange die zu großen Gruppen (z. B. von fünfzig Vorlagen) zusammengefaßten jeweils drei Zahlenwerte übereinstimmen, ist eine ungestörte, praktisch fortlaufende Verfilmung möglich. Mängel der Vorlagen können später im Rechner erkannt und korrigiert werden. Lediglich erhebliche Funktionsstörungen, wie ein Defekt am Codeleser oder an der Blipaufbelichtungsvorrichtung oder in der Weiterleitung zu den Speichern, also das regelrechte Ausfallen von Vorlagen oder ihrer Meldung bei einer ihrer drei Erfassungsstellen führt zu einer spürbaren Abschaltung der Kamera nach Durchlauf des der vorgegebenen Zahl entsprechenden Vorlagenpacks.

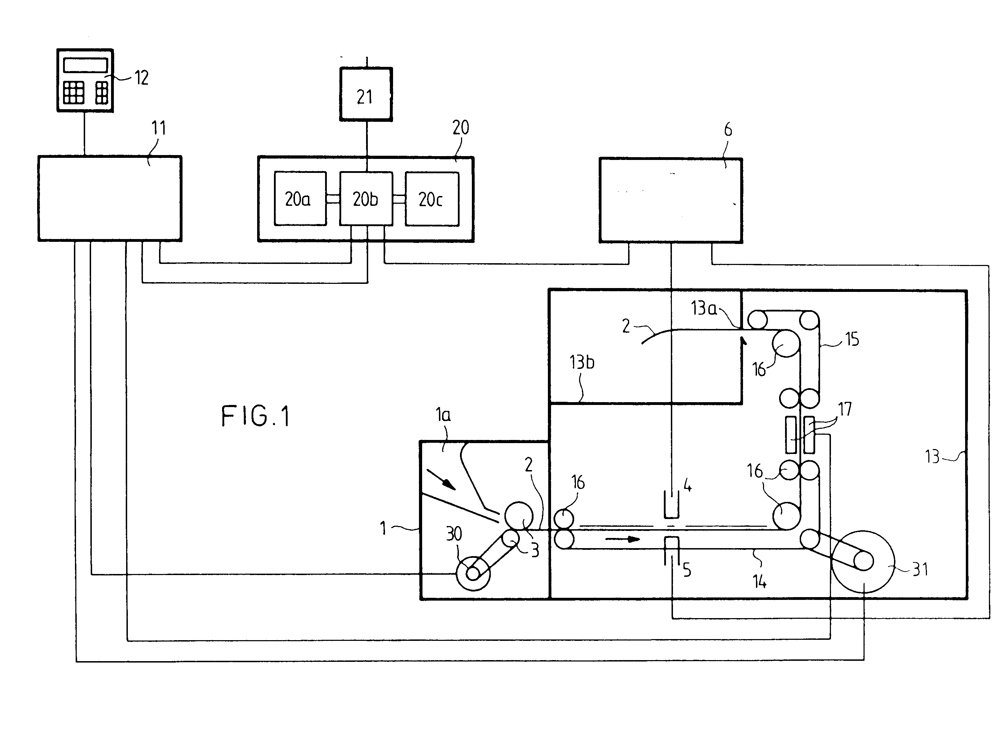

Die Erfindung wird anhand einer Zeichnung näher erläutert. Die einzige Figur zeigt eine schematische Darstellung einer erfindungsgemäßen Mikrofilmkamera.

Eine Mikrofilmkamera gemäß der Figur weist, von außen betrachtet, zwei mechanische Gerätebaugruppen 1 und 13 auf, deren Geräteteile elektrisch angetrieben und elektronisch gesteuert werden.

Die einem Benutzer zunächstliegende Vorlagenzuführvorrichtung 1 dient dem Einzug von mikrozuverfilmenden Vorlagen 2 und weist einen Eingabeschacht 1a für die Vorlagen 2 und wenigstens ein Transportrollenpaar 3 auf. An die Stelle des Eingabeschachtes könnte auch eine Stapelvorrichtung treten, durch die die Vorlagen automatisch eingezogen werden. Das Transportrollenpaar 3 ist bei Einschaltung des Gerätes mittels eines nicht gezeigten Hauptschalters durch einen Antrieb 30 antreibbar. Der Antrieb 30 ist mit einer elektronischen Steuervorrichtung 11, die nachfolgend näher beschrieben wird, verbunden und von hier aus ein-und ausschaltbar. Von der Vorlagenzuführvorrichtung 1 wird eine eingegebene Vorlage 2 in die Kamerabaugruppe 13 durch Führungsspalte zwischen den Gerätebaugruppen transportiert. Diese Kamerabaugruppe 13 enthält einen Codeleser, der aus der Codeleseoptik 4, Steuerlichtschranke 5 und der Leserelektronikbaugruppe 6 besteht. In der Kamerabaugruppe 13 befindet sich auch die eigentliche, nicht näher dargestellte Mikrofilm-Aufnahmekamera mit Objektiv und Film und Filmantrieb. Hiervon ist lediglich die Belichtungsstation 17 für die Vorlagen 2 schematisch angedeutet, weil es für die vorliegende Erfindung nicht auf die spezielle Kameraausgestaltung ankommt. Die Belichtungsstation 17 enthält auch eine Aufbelichtungseinrichtung für Blips. Hier dienen Schleppbänder 14, 15 mit Andruckrollen 16 und ggf. dazwischen angeordneten Leitflächen dem Transport der Vorlagen 2. Der Antrieb 31 für das Schleppband 14 ist ebenfalls mit der Steuervorrichtung 11 verbunden. Dabei ist das Schleppband 14 vor der Belichtungsstation 17 um 90 nach oben umgelenkt. Auch das Transportband 15 ist um 90° umgelenkt, so daß eine abgelichtete Vorlage 2 schließlich um 180° gewendet aus einem Ausgabespalt 13a der Kamerabaugruppe 13 ausgegeben und auf einem Auffangpult 13b gesammelt werden kann. Die Kamerabaugruppe 13 kann mehrere Deckel oder abnehmbare Wandteile aufweisen, durch welche Kamera- und Transport- oder Überwachungsteile zu Bedienungs-oder Reparaturzwecken zugänglich sind. Die Kamera ist beim vorliegenden Beispiel so ausgebildet, daß eine Vorlage 2 durch die Belichtungsstation 17 weitertransportiert wird.

Es ist üblich, den einzelnen Mikrobildern bei der Ablichtung einer Vorlage 2 einen Blip aufzubelichten. Die den fortlaufenden Bildnummern entsprechenden Blips sind untereinander gleich. Wenn jedoch ein neuer Nummernbereich beginnt, dann wird dies auf dem Film durch einen anderen Bliptyp (z.B. länger) gekennzeichnet. Ein einem anderen Bliptyp von Hand oder mit Steuerkarte zugeordneter Aufnahmebereich wird nachfolgend als Blipbereich bezeichnet. Es ist daher notwendig, den Beginn eines anderen Stapelteiles entweder von Hand mittels einer Tastatur 12 oder durch eine entsprechende Steuerkarte einzugeben.

Nun ist es üblich, auf einzelnen Vorlagen oder auch allen Vorlagen vor der Verfilmung Codes aufzubringen, z. B. sog. Barcodes, die von einem Rechner vergeben werden können. Diese Codes können der Zuordnung der Vorlagen zu einzelnen Sachgebieten oder Kunden oder dergleichen dienen. Der Codeleser 4 tastet jede Vorlage nach einem Code ab und meldet einen gelesenen Code ebenso wie das Fehlen eines Codes auf einer Vorlage 2 an die ihm zugeordnete Leserelektronik 6.

Diese Anordnung an sich erlaubt es aber nicht, den ordnungsgemäßen Durchlauf von den Leser 4 passierenden Vorlagen oder Steuerkarten durch den Aufnahmeteil 13 bzw. deren richtige Erfassung zur Steuerung der Blip-Aufbelichtung in Zuordnung zum Leser zu kontrollieren. Dieser Nachteil soll nun mit der vorliegenden Erfindung auf die nachfolgend näher beschriebene Weise vermieden werden. Eine Schwierigkeit besteht dabei darin, daß ein und dieselbe Vorlage oder Steuerkarte den Codeleser 4, 5 und die Belichtungsstation 17 mit einer zeitlichen Verschiebung passiert. Es muß daher sichergestellt werden, daß beide Einrichtungen jede Vorlage registrieren.

Um bei einer Anordnung gemäß dem Ausführungsbeispiel nach der gezeigten Figur bei jeder einzelnen der schnell durchlaufenden Vorlagen 2 oder Steuerkarten deren zeitlich verschiedenen Durchlauf durch die beiden Einrichtungen 4, 5 bzw. 17 ohne Verwechslung mit einer der vorauslaufenden oder nachkommenden Vorlagen zu erreichen, sind die Steuervorrichtung 11 für die Kamera und die Leserelektronik 6 in besonderer Weise ausgebildet und es ist diesen eine besonders ausgebildete Überwachungseinheit 20 zugeschaltet. Die Überwachungseinheit 20 weist eine Zähl- und Vergleichseinrichtung 20b auf, die mit einem Zwischenspeicher 20a für die Kamera bzw. die Blipaufbelichtungsstation und einem Zwischenspeicher 20c für den Codeleser verbunden ist. Die Zähl- und Vergleichseinrichtung 20b ist mit der Steuerschaltung 11 für die Kamera und der Leserelektronik 6 verbunden und speichert die von dort erhaltenen Werte der Reihe nach in den jeweiligen Zwischenspeicher 20a bzw. 20c ein, um sie von dort aus der Reihe nach wieder abzurufen und auf das Vorhandensein jeweils der beiden Werte vom Codeleser und von der Kamera je Vorlage zu vergleichen. Dieser Vergleich erfolgt dann, wenn die Zähl- und Vergleichseinrichtung 20b Übereinstimmung einer voreingestellten Vergleichsrate mit den gemeldeten Vorlagen feststellt.

Mit der Steuervorrichtung 11 für die Kamera sind die Transportmittel in der Vorlagenzuführvorrichtung 1 und im Kamerabauteil 13, die eigentliche Kamera samt Filmtransport, die Belichtungsstation 17 und die Tastatur 12 verbunden. Die Tastatur 12 kann dabei zugleich Leuchtanzeigen für die Kamerafunktionen aufweisen. Die Leserelektronik 6 ist mit dem eigentlichen Codeleser 4 und der Steuerlichtschranke 5 verbunden.

Die Funktionsweise der Ausgestaltung nach der Figur ist nun folgende:
Gelangt eine Vorlage zur Steuerlichtschranke 5, so meldet diese den Durchgang einer Vorlage an die Leserelektronik 6. Dadurch wird der Codeleser 4 aktiviert, der Code gelesen und über die Leserelektronik 6 das Ergebnis (vorhandener oder nicht vorhandener Code) an die Zähl- und Vergleichseinrichtung 20b weitergeleitet. Die Zähl- und Vergleichseinrichtung 20b zählt die Vorlage, vergleicht das Ergebnis mit einer voreinstellbaren Vergleichsrate und gibt die erfaßten Codes oder nicht vorhandenen Codes an den einen Zwischenspeicher 20c weiter. Dann wird die Vorlage in die Belichtungsstation 17 transportiert. Hier wird, gesteuert durch die Steuervorrichtung 11 für die Kamera, das vorgewählte Blipzeichen auf den Film zusammen mit dem Mikrobild aufbelichtet. Ein vorgewähltes Blipzeichen kann auch darin bestehen, daß die Vorlage keinen Blip bekommt. Außerdem sendet die Steuervorrichtung 11 ein sog. ASCII-Zeichen für je eine Blipart, also auch einen fehlenden Blip, an die Zähl- und Vergleichseinrichtung 20b und weiter in den anderen Zwischenspeicher 20a.

So wird nun eine Vorlage nach der anderen verfilmt und von jeder der erfaßte Code oder nicht vorhandene Code in dem Zwischenspeicher 20c und das entsprechende ASCII-Zeichen im Zwischenspeicher 20a abgelegt, bis die Zähl- und Vergleichseinrichtung 20b Übereinstimmung einer voreingestellten Vergleichsrate mit den gemeldeten Vorlagen feststellt. Bei Eintritt dieses Ereignisses stopt die Zähl- und Vergleichseinrichtung 20b über die Steuervorrichtung 11 für die Kamera den Antrieb 30 der Vorlagenzuführvorrichtung 1. Nach einer Wartezeit, die sicherstellt, daß alle schon eingegebenen Vorlagen durch den Ausgangsspalt 13a zum Auffangpult 13b gelangt sind, holt die Zähl-und Vergleichseinrichtung 20b die Gesamtzahl der ASCII-Zeichen der gegebenenfalls verschiedenen Bliparten aus dem Zwischenspeicher 20a und die Gesamtzahl der Codelesungen (vorhandene und nicht vorhandene Codes) und vergleicht die beiden Gesamtzahlen mit der Zahl der gemeldeten Vorlagen. Sind die drei Zahlen gleich, so ist sichergestellt, daß jede gezählte Vorlage eine Meldung vom Codeleser (4, 5, 6) und ein dem Blip entsprechendes Zeichen geliefert hat.

In der Zähl- und Vergleichseinrichtung 20b stehen nun die Zwischenspeicherwerte (für Codes und Bliparten) wie in einer Tabelle geordnet zur Verfügung. Die durch die geometrische Lage von Codeleser 4 und Belichtungsstation 17 bedingten zeitlich verschobenen Meldungen des Codes und der Blipart ein und derselben Vorlage sind nun zusammengefügt und geordnet in einer Zeile der Tabelle. Die Werte können nun z. B. zeilenweise an einer Schnittstelle 21 von einem Rechner abgeholt und weiterverarbeitet werden.

Nach Übernahme der Daten kann der Rechner über die Schnittstelle 21, Zähl- und Vergleichseinrichtung 20b und Steuervorrichtung 11 die Vorlagenzuführung 30 wieder einschalten.

Es ist erkennbar, daß die beschriebene Kontrollvorrichtung für den ordnungsgemäßen Durchlauf der Vorlagen 2 und/oder vorgeschalteter Steuerkarten bzw. für eine ordnungsgemäße Zuordnung von Codes und Bliparten auf Vorlagen 2 und Mikrofilm durch eine Mikrofilmkamera mit Codeleser in vielfältiger Weise anwendbar ist, nämlich bei völlig automatischem Antrieb, bei teilweiser oder ausschließlicher Steuerung der Kamera über eine Tastatur 12, bei automatischer Zuführung der Vorlagen von Vorlagenstapeln oder Stapelteilen oder auch bei Zuführung der Vorlagen von Hand. Im letzteren Fall erfolgt lediglich die Zuführung der Vorlagen und/oder Steuerkarten wesentlich langsamer. Allen diesen Betriebsarten aber ist gemeinsam, daß eine bestimmte Vorlage am Codeleser 4, 5, 6 eine Meldung (erfaßter Code und/oder nicht vorhandener Code) und bei der Belichtungsstation 17 eine weitere Meldung (Blipart) auslöst und beide Meldungen über die zugeordneten Schaltungen 11 bzw. 6 in die zugeordneten Zwischenspeicher 20a bzw. 20c eingespeichert und dort zum Vergleich miteinander von der Zahl- und Vergleichseinrichtung 20b nach einer vorgegebenen Vorlagenzahl abgerufen und verglichen werden. Stellt die Zähl- und Vergleichseinrichtung 20b Übereinstimmung der Gesamtzahl der Codes mit der Gesamtzahl der Blipzeichen und der Anzahl der gemeldeten Vorlagen fest, so folgen, wie schon beschrieben, Datenübernahme und evtl. Einschalten des Antriebs 30 der Vorlagenzuführvorrichtung. Stellt der Vergleich keine Übereinstimmung der drei Endzahlen fest, so kann man z. B. mit Hilfe der Tabelle und der verfilmten Vorlagen den Fehler bestimmen. Das weitere Vorgehen der Fehlerbestimmung bzw. Fehlerbehandlung ist ausschließlich anwenderspezifisch.

Der Anwender kann über die Schnittstelle 21 von der Steuervorrichtung 11 für die Kamera über die Zähl- und Vergleichseinrichtung 20b weitere Informationen anfordern oder an die Kamera Befehle übermitteln. Außerdem kann die Steuervorrichtung 11 der Kamera über die Zähl- und Vergleichseinrichtung 20b und die Schnittstelle 21 automatisch verschiedene kameraeigene Ereignisse oder Zustände melden.

## Patentansprüche

1. Verfahren zum Erfassen von auf zu verfilmenden Vorlagen aufgebrachten Codes in einer Mikrofilmkamera mit einem Codeleser, in der auf den Film in einer Belichtungsstation den einzelnen Bildern der Vorlagen zugeordnete Blips aufgebracht werden, wobei die vom Codeleser erfaßten Codes einem Zwischenspeicher (20c) zugeführt und gespeichert werden und der jedem aufgenommenen Bild zuzuordnende Wert eines Blipzählers in einem anderen Zwischenspeicher (20a) abgespeichert wird und die Zwischenspeicherwerte verknüpft zu einem Rechner gegeben werden, dadurch gekennzeichnet,
- daß eine Zähl- und Vergleichseinrichtung (20b) auf eine vorgebbare Zahl eingestellt ist, daß die Zähl- und Vergleichseinrichtung (20b) die Zahl der durch die Kamera (13) seit dem Ende eines vorhergehenden Vorlagentransport- oder - zuführungsstops durchlaufenden Vorlagen zählt und nach Erreichen, der vorgegebenen Zahl die Vorlagenzuführung (30) stopt,
- daß alle vom Codeleser (4, 5, 6) bis zum Stoppen der Vorlagenzuführung erfaßten vorhandenen oder nicht vorhandenen Codes in dem Zwischenspeicher (20c) gemeinsam gespeichert und gezählt werden,
- daß die jedem aufgenommenen Bild aufbelichtete Blipart als ASCII-Zeichen, auch für einen nicht aufzubringenden Blip, bis zum Stoppen der Vorlagenzuführung gemeinsam in dem anderen Zwischenspeicher (20a) abgespeichert wird und die ASCII-Zeichen in diesem Zwischenspeicher (20a) gezählt werden,
- daß der Zähl- und Vergleichseinrichtung (20b) die Zählergebnisse der beiden Zwischenspeicher (20a, 20c) zugeführt werden und sie die vorgegebene Zahl mit der Gesamtzahl der ASCII-Zeichen und der Gesamtzahl der Codelesungen vergleicht,
- daß bei Gleichheit der drei Zählergebnisse Vorlagenzahl, Zahl der Codelesungen und Zahl der ASCII-Zeichen die Werte aus den Zwischenspeichern (20a, 20c) zeilenweise an einer Schnittstelle (21) zu einem Rechner gegeben werden und
- daß nach übernahme der Zwischenspeicherwerte durch den Rechner der Vorlagentransport (30) bzw. die Vorlagenzuführung wieder freigegeben wird.

2. Verfahren nach Anspruch 1, dadurch gekennzeichnet, daß bei Erreichen der vorgegebenen Vorlagenzahl an der Zähl-und Vergleichseinrichtung (20b) und hierzu unterschiedlichen Zwischenspeicherwerten eine Warn- oder Fehleranzeigievorrichtung an einer Tastatur (12) oder einem Anzeigefeld ausgelöst wird.

3. Mikrofilmkamera mit einem Codeleser zum Erfassen von auf zu verfilmenden Vorlagen aufgebrachten oder fehlenden oder fehlerhaften Codes, wobei auf dem Film in einer Belichtungsstation den einzelnen Bildern der Vorlagen zugeordnete Blips aufbringbar sind, zur Durchführung des Verfahrens nach Anspruch 1 dadurch gekennzeichnet,
- daß ein Zwischenspeicher (20c) vorgesehen ist, in dem die vom Codeleser (4, 5, 6) erfaßten Codes zwischengespeichert und gezählt werden,
- daß ein anderer Zwischenspeicher (20a) vorgesehen ist, in dem ASCII-Zeichen für die Bliparten gespeichert und gezählt werden,
- daß eine auf eine vorgegebene Zahl einstellbare Zähl- und Vergleichseinrichtung (20b) vorgesehen ist, durch welche die Zahl der zwischen zwei Vorlagentransport- oder -zuführungsstops durch die Kamera durchlaufenden Vorlagen gezählt wird und nach Erreichen der vorgegebenen Zahl der Vorlagentransport bzw. die Vorlagenzuführung anhaltbar ist und durch die die zugeordneten Zahlenwerte der beiden Zwischenspeicher (20a, 20c) miteinander und mit der vorgegebenen Zahl verglichen werden, und
- daß eine Schnittstelle (21) vorgesehen ist, durch die bei Gleichheit der drei Zahlenwerte die Zwischenspeicherwerte zeilenweise an einen Rechner weiterleitbar sind.

## Claims

1. Process for detecting codes placed on documents to be filmed in a microfilm camera with a code reader, in which blips assigned to the individual images of the documents are placed on the film in an exposure station, whereby the codes detected by the code reader are fed to a buffer memory (20c) and stored, and the blip counter value that is assigned to each picture taken is stored in another buffer memory (20a) and the data of the buffer memories are combined and fed to a computer, characterised in that
- a counter and comparator device (20b) is set to a preset number, that the counter and comparator device (20b) counts the number of documents passing through the camera (13) since the end of a preceding interruption to the document transport or feed and after the preset number is reached, stops the document feed (30),
- all codes that are present or not present up to the time the document feed was stopped, and which are detected by the code reader (4, 5, 6) are jointly stored and counted in the buffer memory (20c),
- the type of blip exposed on each picture taken, and that of a blip not to be applied, is jointly stored as an ASCII character in the other buffer memory (20a) until the document feed is stopped, and the ASCII characters are counted in this buffer memory (20a),
- the counter readings of the two buffer memories (20a, 20c) are fed to the counter and comparator device (20b) and it compares the preset number with the total number of ASCII characters and the total number of code readings,
- with parity between the three counter readings: number of documents, number of code readings and number of ASCII characters, the data are fed out of the buffer memories (20a, 20c) line by line at an interface (21) to a computer and
- after retrieval of the buffer memory data by the computer, the document transport (30) or document feed is enabled again.

2. Process according to claim 1, characterised in that when the preset number of documents is obtained at the counter and comparator device (20b) and the buffer memory data differ from this, an alarm or error-indicating device is triggered at a keyboard (12) or a display panel.

3. Microfilm camera with a code reader for detecting missing or faulty codes placed on documents to be filmed, whereby blips assigned to the individual images of the documents can be placed on the film in an exposure station; and for implementing the process according to claim 1, characterised in that,
- a buffer memory (20c) is provided in which the codes detected by the code reader (4, 5, 6) are temporarily stored and counted,
- another buffer memory (20a) is provided in which ASCII characters for the types of blips are stored and counted,
- a counter and comparator device (20b), that can be set to a preset number, is provided, by which the number of documents passing through the camera between two interruptions to the document transport or feed is counted and after the preset number is reached, the document transport or document feed can be stopped, and by which the assigned numerical data of the two buffer memories (20a, 20c) are compared with each other and with the preset number, and
- an interface (21) is provided, by which at parity between the three sets of numerical data, the buffer memory data can be output line by line to a computer.

## Revendications

1. Procédé de saisie de codes apposés sur des originaux à microfilmer dans une caméra à microfilm avec un lecteur de codes, dans lequel des pavés optiques coordonnés aux différentes images des originaux sont apposés sur le film dans une unité d'exposition, les codes enregistrés par le lecteur de codes étant envoyés et enregistrés dans une mémoire temporaire (20c) et la valeur d'un compteur de pavés optique qui coordonne chaque image enregistrée dans une autre mémoire temporaire (20a) et les valeurs de la mémoire temporaire étant fournies en liaison avec un ordinateur, caractérisé en ce
- qu'un dispositif de comptage et de comparaison (20b) est réglé sur un nombre prédéfinissable, que le dispositif de comptage et de comparaison (20b) compte le nombre d'originaux qui est passé par la caméra à microfilm (13) depuis la fin d'un arrêt du transport ou de l'alimentation des originaux précédents et arrête le dispositif d'alimentation en originaux (30) après avoir atteint le nombre prédéfini,
- que tous les codes existants ou inexistants saisis par le lecteur de codes (4, 5, 6) jusqu'à l'arrêt du dispositif d'alimentation en originaux sont stockés ensemble dans la mémoire temporaire (20c) et comptés,
- que le type de pavé optique exposé sur chaque image enregistrée est stocké dans l'autre mémoire temporaire (20a) sous forme de caractère ASCII, même pour un pavé optique qui ne doit pas être apposé, jusqu'à l'arrêt du dispositif d'alimentation en originaux et que les caractères ASCII sont comptés dans cette mémoire temporaire (20a),
- que les résultats du comptage des deux mémoires temporaires (20a, 20c) sont envoyés au dispositif de comptage et de comparaison (20b) et que ce dernier compare le nombre prédéfini avec le nombre total de caractères ASCII et le nombre total de lectures de code,
- qu'en cas d'égalité des trois résultats de comptage du nombre d'originaux, du nombre de lectures de codes et du nombre de caractères ASCII, les valeurs sont transmises ligne par ligne des mémoires temporaires (20a, 20c) à une interface (21) vers un ordinateur et
- en ce que le transport des originaux (30) ou le dispositif d'alimentation en originaux est à nouveau débloqué après la reprise des valeurs des mémoires temporaires par l'ordinateur.

2. Procédé suivant la revendication 1, caractérisé en ce qu'un dispositif d'avertissement ou d'affichage d'erreur sur un clavier (12) ou sur un écran se déclenche lorsque le nombre d'originaux prédéfini est atteint sur le dispositif de comptage et de comparaison (20b) et qu'en outre les valeurs des mémoires temporaires sont différentes.

3. Caméra à microfilm avec un lecteur de codes pour la saisie des codes apposés sur les originaux à microfilmer ou manquants ou défectueux, des pavés optiques coordonnés aux différentes images des originaux pouvant être apposés sur le film dans une unité d'exposition, pour l'exécution du procédé suivant la revendication 1 caractérisé en ce:
- qu'est prévue une mémoire temporaire (20c) dans laquelle les codes saisis par le lecteur de codes (4, 5, 6) sont stockés temporairement et comptés,
- qu'est prévue une autre mémoire temporaire (20a) dans laquelle des caractères ASCII pour les types de pavés optiques sont stockés et comptés,
- qu'un dispositif de comptage et de comparaison (20b) réglable à un nombre prédéfini est prévu grâce auquel le nombre d'originaux qui passent par la caméra entre deux arrêts du transport des originaux ou du dispositif d'alimentation en originaux est compté et le transport d'originaux ou le dispositif d'alimentation en originaux peut être arrêté après avoir atteint le nombre prédéfini, et grâce auquel les valeurs numériques correspondantes des deux mémoires temporaires (20a, 20c) sont comparées entre elles et avec le nombre prédéfini, et
- en ce qu'est prévue une interface (21) grâce à laquelle les mémoires temporaires peuvent être transmises ligne par ligne à un ordinateur en cas d'égalité des trois valeurs numériques.
